Europäisches Patentamt

European Patent Office

Office européen des brevets

(11) Veröffentlichungsnummer: **0 179 278**
**A2**

## (12) EUROPÄISCHE PATENTANMELDUNG

(21) Anmeldenummer: **85111895.0**

(22) Anmeldetag: **20.09.85**

(51) Int. Cl.⁴: **G 01 L 9/00**
**G 01 L 9/02, G 01 L 23/24**

(30) Priorität: **25.10.84 DE 3439080**
**15.05.85 DE 3517557**
**10.08.85 DE 3528768**

(43) Veröffentlichungstag der Anmeldung:
**30.04.86 Patentblatt 86/18**

(84) Benannte Vertragsstaaten:
**AT DE FR GB IT SE**

(71) Anmelder: **ROBERT BOSCH GMBH**
**Postfach 50**
**D-7000 Stuttgart 1(DE)**

(72) Erfinder: **Dobler, Klaus, Dr.-Ing.**
**Bettäckerstrasse 12**
**D-7016 Gerlingen(DE)**

(72) Erfinder: **Wendel, Jürgen**
**Germersheimer Strasse 14**
**D-7000 Stuttgart 31(DE)**

(54) **Drucksensor.**

(57) Drucksensor, insbesondere zur Erfassung des Verbrennungsdrucks oder des Verteilerpumpendrucks für Brennkraftmaschinen, wobei das druckempfindliche Element, üblicherweise ein Dickschichtwiderstand, am Boden eines Trägers angeordnet ist, der mit seinem unteren Teil die Druckgefäßwandung vollständig durchsetzt und bei Druckeinwirkung eine elastische Verformung erfährt, die sich auf das von einem gesonderten Halteteil auf den Boden des im Träger gebildeten Sacklochs gepreßten druckempfindlichen Elements auswirkt, wodurch dieses seine elektrischen Eigenschaften zur Signalauswertung ändert.

EP 0 179 278 A2

./...

FIG. 1

R. 19693 i.P. II
1817/ot/wi
8.8.1985 Sf/Pi

Firma Robert Bosch GmbH, 7000 Stuttgart 1

Drucksensor

Stand der Technik

Die Erfindung geht aus von einem Drucksensor nach der
Gattung des Hauptanspruchs. Ein solcher Drucksensor ist
bekannt aus der DE-OS 31 25 640 und umfaßt einen Träger, der ein druckempfindliches Element, nämlich einen
Schichtwiderstand trägt und am druckraumseitigen Ende
eines Bauteils angeordnet ist. Der Träger bildet eine
Durchführung, die eine aus isolierendem Material bestehende Vergußmasse aufnimmt, auf welcher der druckempfindliche Schichtwiderstand sitzt und durch welche
gleichzeitig die entsprechenden elektrischen Zuführungsleitungen geführt sind. Problematisch kann bei
einem solchen Drucksensor der Umstand sein, daß die
Vergußmasse nicht die erforderliche mechanische Festigkeit hat, um selbst als Träger für den Schichtwiderstand dienen zu können, außerdem ist es nicht immer

1969372̶7̶8̶ I.P. II

erwünscht, das eigentliche druckempfindliche Element
unmittelbar angrenzend zum Druckmedium ohne Trennung
anzuordnen. Andererseits ist es zwar bekannt, das
druckempfindliche Element, welches vorzugsweise ein
druckempfindlicher Dickschichtwiderstand oder ein sonstiges, auf piezoresistiver oder piezoelektrischer Basis arbeitendes Meßelement sein kann, dadurch vollständig vom Druckmedium zu trennen, daß eine kostenträchtige und meist vergleichsweise bruchempfindliche
Membrankonstruktion vorgesehen wird, die das druckempfindliche Element gegenüber dem Druckmedium isoliert;
hierbei ergeben sich aber wieder, abgesehen zum Membranmaterial selbst, umständliche und komplizierte Maßnahmen, um die Membran dauerhaft zu lagern und zu halten.

Der Erfindung liegt daher die Aufgabe zugrunde, einen
Drucksensor zu schaffen, der besonders kostengünstig
ist, zur Erfassung hoher, dynamisch einwirkender Drücke
verwendet werden kann und bei welchem Einflüsse oder
Beschädigungen durch die Einwirkung des Druckmediums
selbst ausgeschlossen sind.

Vorteile der Erfindung

Der erfindungsgemäße Drucksensor löst diese Aufgabe
mit den kennzeichnenden Merkmalen des Hauptanspruchs
und hat den Vorteil, daß Aufbau und Funktion des Sensors sehr einfach und vor allen Dingen dauerfest sind,
insbesondere auch deshalb, weil keine effektiven
Durchbiegungen oder Formveränderungen unter der Wirkung des Druckmediums auftreten, sondern die Druckerfassung durch eine insgesamt sich ergebende, elastische

19693 i.F.II

0179278

Verformung des gesamten vorderen Trägerteils durchgeführt werden kann, wobei das eigentliche, die Druckeinwirkung erfassende Element vollständig abgeschlossen in einem inneren Hohlraum des allseitig gegenüber
dem Druckmedium trennenden Trägers angeordnet ist.

Daher ist das druckempfindliche Element in einer
sacklochartig ausgebildeten Vertiefung des Trägers
aufgenommen und umschlossen, jedoch gegen den Bodenteil des Trägers starr gehalten, so daß es elastische
Verformungen, die sich jedenfalls auf den Bodenteil
des Trägers auswirken, aber auch durch Verformung von
den Bodenteil tragenden Wandbereichen erzeugt sein können, erfassen und in eine elektrische Signalgabe umsetzen kann.

Vorteilhafte Weiterbildungen und Verbesserungen des im
Hauptanspruch angegebenen Drucksensors ergeben sich
aus den Gegenständen der Unteransprüche. Besonders vorteilhaft ist die Ausbildung des Trägers in Form einer
die das Druckmedium umschließende Wandung durchsetzenden Schraube, die selbst wieder einen den druckempfindlichen Dickschichtwiderstand oder das sonstige druckempfindliche Element gegen ihren inneren Schraubenboden pressenden, weiteren Einsatz aufnimmt, der in die
Schraube vorzugsweise ebenfalls eingeschraubt sein
kann.

Insbesondere nach den Ansprüchen 17 bis 21 ist eine
Druckmessung an Behältern oder Leitungen möglich, falls
deren Wandungen nicht zur Aufnahme einer Sackbohrung
dick genug sind. Dadurch kann der Drucksensor auch bei
dünnwandigen Behältern oder Leitungen verwendet werden.
Es ist ohne konstruktive Änderungen ein Anbau des Drucksensors möglich.

Zeichnung

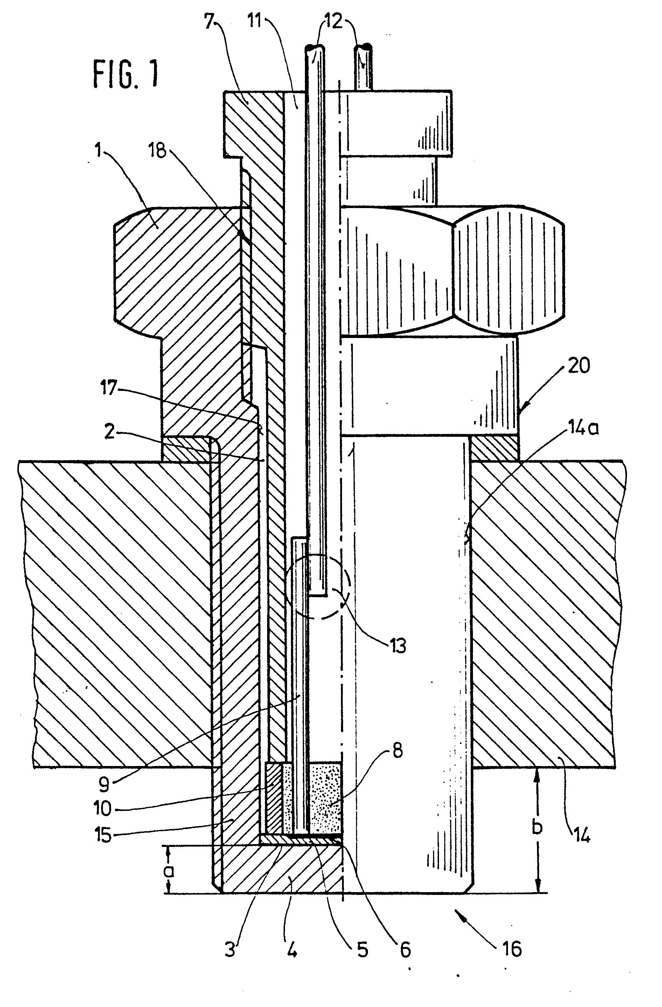

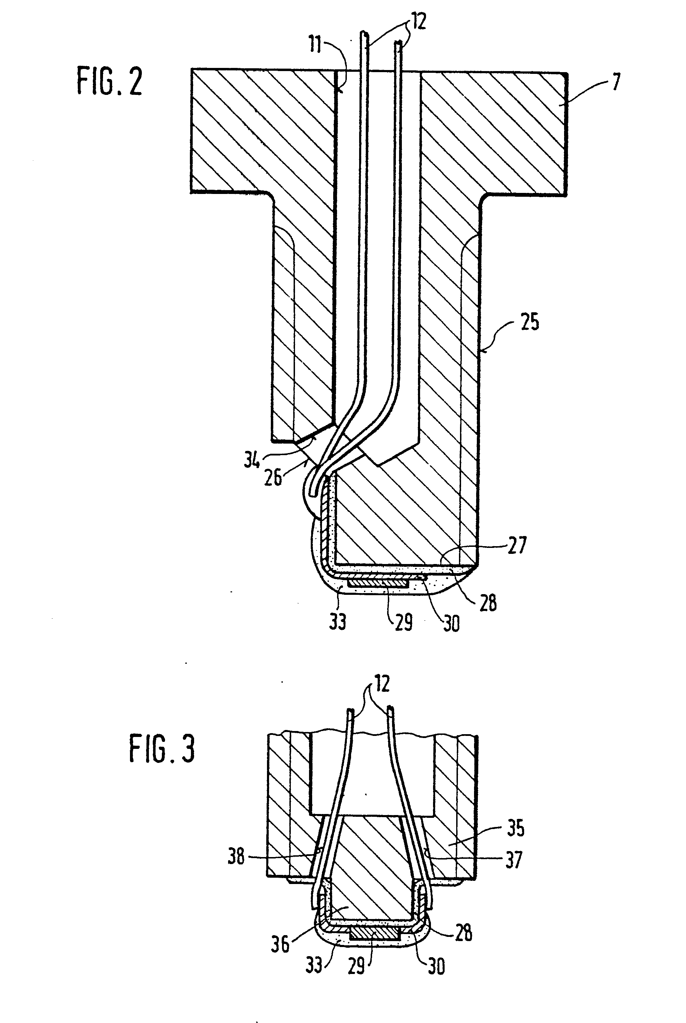

Ausführungsbeispiele der Erfindung sind in der Zeichnung dargestellt und in der nachfolgenden Beschreibung näher erläutert. Es zeigen Figur 1 zur Hälfte im Schnitt den das druckempfindliche Element lagernden Träger, der in eine das Druckmedium aufnehmenden Wandung eingesetzt ist, und Figur 2 und 3 je eine Abwandlung des Ausführungsbeispiels nach Figur 1 und Figur 4 und 5 je ein weiteres Ausführungsbeispiel.

Beschreibung der Ausführungsbeispiele

Der Grundgedanke vorliegender Erfindung besteht darin, das druckempfindliche Element vollständig durch einen Trägerteil abgeschlossen an das Medium angrenzen zu lassen, dessen Druck oder Druckvariation gemessen werden sollen, wobei einerseits die Elastizität des Trägers im Übergangsbereich ausgenutzt wird, wozu andererseits das druckempfindliche Element im sacklochähnlichen Aufnahmebereich des Trägers nicht nur einfach angeordnet, sondern gegenüber dessen Verformbarkeit auch starr gehalten wird.

In der Zeichnung ist die das Druckmedium abgrenzende Wandung nur teilweise dargestellt und mit 14 bezeichnet; das Medium, dessen Druck bzw. Druckvariation gemessen werden soll, befindet sich in der Zeichenebene unten bei 16. Der grundsätzliche Aufbau des in der Zeichnung gezeigten Drucksensors oder -gebers 20 wird im folgenden anhand eines als Schraube oder in Schraubenform ausgebildeten Trägers 1 erläutert, obwohl hier auch andere Bauteile in Frage kommen wie Bolzen, Stifte, gegebenenfalls sogar, wie weiter unten erläutert wird, ein Teilausschnitt der Wandung 14 des Druckbehälters selbst.

1817/ot/wi

- 5 -

Bei dem in der Zeichnung dargestellten Ausführungsbeispiel durchsetzt der Träger 1 die Wandung 14 des Druckbehälters vollständig, wobei der Träger 1 mit seinem unteren, mit dem Druckmedium 16 in Kontakt kommenden Bereich mindestens so weit in die Wandung 14 reicht, daß mindestens der Boden 4 des Trägers 1 mit dem Druckmedium 16 in Kontakt kommt. Mit anderen Worten, die den Träger 1 aufnehmende Bohrung 14a der Wandung muß durchgehend ausgebildet sein, jedenfalls dann, wenn der Träger ein separates Bauteil darstellt. Der Träger 1 ist vorzugsweise in die Aufnahmebohrung eingeschraubt, so daß diese ein Innengewinde und er selbst ein Außengewinde aufweist. Im Träger 1 befindet sich eine Sacklochbohrung 17, die innen mit dem Boden 4 des Trägers 1 vorzugsweise eben abschließt, so daß der Boden 4 mit einer vorgegebenen Dicke a, wie in der Zeichnung gezeigt, stehen bleibt. Falls gewünscht, kann dabei der untere Teil des Trägers 1 auch über die Wandung 14 hinaus um einen vorgegebenen Abstand b in das von der Wandung 14 umschlossene Volumen eindringen, wodurch sich die Elastizitätseigenschaften des Trägers 1 im unteren Bereich durch den größeren, freiliegenden Teil erhöhen.

Von innen liegt gegen den Boden 4, also gegen die innere Bodenfläche der Sacklochbohrung 17 das druckempfindliche Element 6 an, gegebenenfalls oder vorzugsweise nach Zwischenlegen einer Scheibe 5 aus einem elastischen, Druckeinwirkungen übertragenden Material (Kunststoff oder Metall). Dabei wird, wie gleich noch zu erläutern ist, das druckempfindliche Meßelement, welches in der Zeichnung ein Dickschichtwiderstand ist, gegen die innere Bodenfläche oder die Zwischenscheibe 5 gedrückt, und zwar mit einer vorgegebenen, sich jedenfalls mit den zu messenden Drücken oder Druckschwankungen nicht ändernden Anpreßkraft, die von einem separaten Bauteil als Lager-, Preß- oder Halteteil 7 erzeugt wird. Dieses Halteteil 7, wie es im folgenden noch bezeichnet wird, kann für sich gesehen selbst wieder schraubenförmig ausgebildet und bei 18 in einem oberen Gewindebereich der Sacklochbohrung 2 des Trägers 1 eingeschraubt sein.

Dabei ist der Dickschichtwiderstand 6 oder allgemein, das druckempfindliche Element selbst auf ein isolierendes Material 8 als Zwischenteil, welches beispielsweise aus Glas, Keramik oder Kunststoffen bestehen kann, aufgebracht, im Falle eines Dickschichtwiderstandes beispielsweise aufgedruckt, wobei das Zwischenmaterial 8 auch die in ihm enthaltenen Drahtdurchführungen und elektrischen Anschlüsse 9 aufnimmt. Zur mechanischen Fassung kann das Zwischenmaterial 8 von einem Metallring 10 umgeben sein, der nach unten auf der Scheibe 5 aufliegt oder zu dieser vorzugsweise einen geringfügigen Abstand einhält, so daß elastische Druckverformungen des unteren Trägerteilbereichs (Boden 4 und freistehende Wandungen bis zur Höhe b) nicht beeinflußt und ausschließlich vom druckempfindlichen Element erfaßt werden können. Das Halteteil 7 ist jedenfalls so gestaltet, daß es mindestens die Elemente 6 und 8, gegebenenfalls zusammen mit den Elementen 9 und 10 gegen die Scheibe 5 bzw. den Boden 4 preßt und stationär unter vorgegebenem Preßdruck hält, dabei gleichzeitig in seinem Inneren die elektrischen An-

0179278
19693 i.p. II

schlüsse 9 und 12 aufnehmen kann, wobei die beiden vom druckempfindlichen Element nach oben führenden Anschlüsse 9 in einem mittleren Bereich, etwa bei 13, noch mit den beiden nach außen geführten Anschlüssen verschweißt oder verlötet sein können.

Insofern ist der Halteteil 7 hohlzylindrisch ausgebildet und ermöglicht nach der Montage noch ein Ausgießen seines Innenraums 11 mit einem elastischen Werkstoff, so daß sich eine gute Zugentlastung der Anschlußkabel und ein entsprechender Schutz der unteren Elemente ergibt.

Die Funktion eines solchen Drucksensors ist dann wie folgt. Bei Einschrauben des Trägers 1 in eine entsprechende durchgeführte Bohrung 14a der Wandung 14 des Druckbehälters ergibt sich bei auftretenden Drücken eine elastische Verformung des Trägers 1, und zwar insbesondere des Bodens 4 und der im Druckbereich liegenden, insoweit rohrförmigen Wand 15 des Trägers 1; diese elastische Verformung übt eine Kraft auf das druckempfindliche Element, welches ein Dickschichtwiderstand oder auch eine Quarzscheibe o. dgl. sein kann, aus, so daß sich diese Krafteinwirkung zur Druckmessung ausnutzen läßt, da sich eine entsprechende Veränderung der elektrischen Eigenschaften des druckempfindlichen Elementes ergibt.

Es versteht sich, daß das druckempfindliche Element 6 gegen den Boden 4 (oder die Zwischenscheibe 5) in freier Pressung gehalten werden muß, womit gemeint ist, daß mindestens soweit, wie sich ein unterer Trägerbereich durch elastische Verformungen ändern kann, das Halteteil, der Metallring 10 und die sonstigen, an der Erzeugung der Anpreßkraft für das druckempfindliche Element 6 beteiligten Komponenten im Abstand zu der Trägerinnenwandung angeordnet sein müssen, damit sie sich
nicht mit diesen bewegen bzw. elastisch verformen, jedenfalls nicht,
ohne daß die hierbei zur Einwirkung gelangenden Kräfte meßtechnisch über
den Dickschichtwiderstand erfaßt sind.
Man erkennt, daß sich durch einen solchen, vorzugsweise schraubenförmigen Träger, der selbst wieder ein
schraubenförmiges Halteteil in seinem Sackloch aufnimmt,
ein sehr einfacher und vor allen Dingen dauerfester
Aufbau eines Drucksensors realisieren läßt, ohne daß
Membrandurchbiegungen zur Erzielung eines Meßeffekts
ausgenutzt werden müssen. Die gesamte elastische Verformung des vorderen Teils des Trägers 1 dient der Meßsignalerzeugung, wobei selbst bei relativ großen Bodenstärken a noch gute Meßergebnisse erzielt werden können, beispielsweise dann, wenn die Druckvariationen vergleichsweise groß sind und auch eine elastische Verkürzung des Trägers 1 im Bereich 15 seiner den Bodenteil
tragenden Ringwandung erfolgt. Eine solche rein elastische Verformung läßt sich festigkeitsmäßig sehr viel
einfacher beherrschen als eine Membranauslegung und ist
praktisch keiner Alterung unterworfen. Mit Vorzug lassen sich daher solche Drucksensoren bei der Druckmessung in Verteilerpumpen von Kraftstoffeinspritzsystemen
sowie bei der Verbrennungsdruckmessung in Diesel- oder
Ottomotoren einsetzen.

Weiter vorn ist schon erwähnt worden, daß gegebenenfalls ein Bereich der Wandung 14 selbst als Träger ausgenutzt werden kann; in diesem Fall ist in die Wandung

0179278

19693 i.P. II

14 ein Sackloch von außen, in der Zeichenebene also von oben so weit einzubringen, bis nur noch ein Bodenbereich stehen geblieben ist, der einerseits eine hinreichende Festigkeit für den normalen Betrieb des Systems gewährleistet, andererseits aber auch eine so hinreichende Elastizität erreicht hat, daß man bei Einschrauben eines Halteteils 7 mit den anderen Elementen 5, 6, 8 und 9 in dieses wandungseigene Sackloch die elastischen Verformungen des stehen gebliebenen Wandungsbodens zur Druckmessung und elektrischen Meßsignalerzeugung ausnutzen kann. In diesem Fall ist dann im wesentlichen nur die elastische Verformung des stehen gebliebenen Bodenteils zur Druckmessung ausnutzbar, da keine in den eigentlichen Druckraum ragenden Wandungsbereiche vorhanden sein können.

In Figur 2 ist eine Abwandlung des Ausführungsbeispiels dargestellt. Gleiche Bauteile sind wieder mit denselben Ziffern bezeichnet. An der Außenwandung 25 des Halteteils 7 ist eine Abfräsung 26 ausgebildet, in deren Bereich und an der dem Boden 4 des Trägers 1 zugewandten Stirnseite 27 des Halteteils 7 ist eine Isolierschicht 28 angeordnet. Auf dieser sind ein druckempfindlicher Dickschichtwiderstand 29 und dessen Anschlußbahnen 30 aufgedruckt und eingebrannt. Durch eine zweite Isolierschicht 33 sind der Dickschichtwiderstand 29 und seine Anschlußbahnen 30 abgedeckt. Diese liegt am Boden 4 des Trägers 1 zur Druckübertragung an. Beide Isolierschichten 28, 33 sind in herkömmlich bekannter Dickschichttechnik hergestellt. Die Isolierschicht 28 besteht dabei aus Glas, wie das bei emaillierten Stahlsubstraten üblich ist. Für die zweite Isolierschicht 33 werden eben-

...

falls Glas oder Kunststoffe bzw. Lacke verwendet. Durch Anwendung der Dickschichttechnik kann der Drucksensor sehr preisgünstig und einfach hergestellt werden. Die elektrischen Anschlüsse 12 sind über eine Bohrung 34 aus dem Innenraum 11 des Halteteils 7 herausgeführt und mit den Anschlußbahnen 30 verlötet.

In Figur 3 ist eine zweite Abwandlung des Ausführungsbeispiels dargestellt. Das dem Boden 4 des Trägers 1 zugewandte Endteil 35 des Halteteils 7 ist abgedreht, so daß es einen kurzen Fortsatz 36 aufweist. An diesen Fortsatz 36 sind, wie bei der Abwandlung nach Figur 2 in Dickschichttechnik, die beiden Isolierschichten 28, 33 und der Dickschichtwiderstand 29 schichtweise angebracht. Über zwei Bohrungen 37, 38 sind die elektrischen Anschlüsse 12 in den Innenraum 11 des Halteteils 7 geführt. Bei beiden Abwandlungen ist darauf zu achten, daß die Lötstelle zwischen den elektrischen Anschlüssen 12 und den Anschlußbahnen 30 geschützt angeordnet ist. Sie darf nicht beim Eindrehen des Halteteils 7 in die Sacklochbohrung 2 des Trägers 1 beschädigt werden. Die elektrischen Anschlüsse sind dabei nicht abgedichtet in den Bohrungen 34, 37, 38 angeordnet, da das Halteteil 7 vom Druckraum geschützt in der Sacklochbohrung 2 des Trägers 1 angeordnet ist.

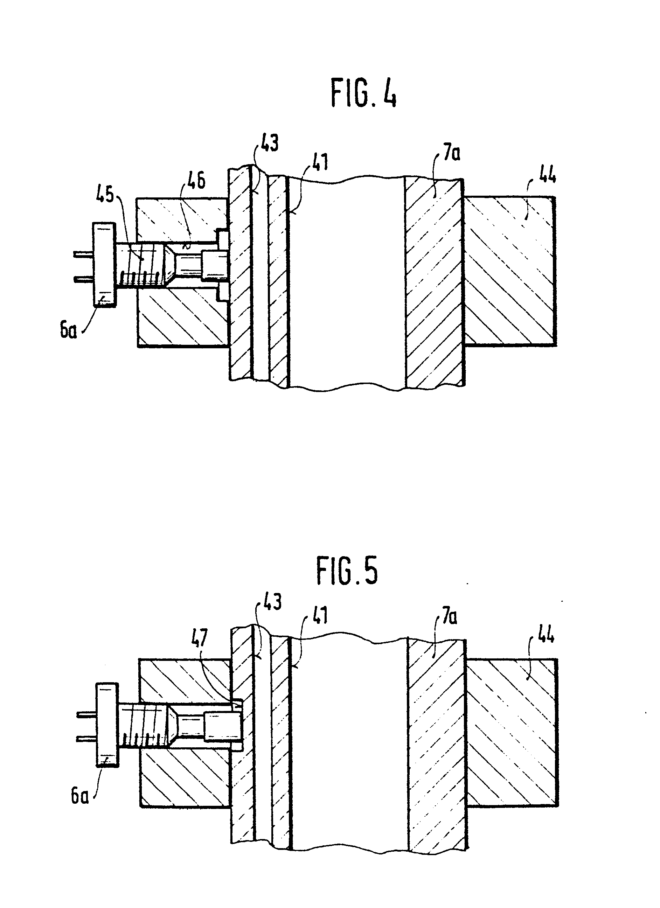

In Figur 4 ist ein Ausführungsbeispiel insbesondere für dünnwandige Träger dargestellt. Im Halteteil 7a - beispielsweise einem Düsenhalten - ist eine etwa mittige Längsbohrung 41 ausgebildet. Parallel zur Längsbohrung 41 befindet sich in der Wandung des Halteteils 7a eine Bohrung 43 mit kleinem Durchmesser. Die Bohrung 43 ist dabei möglichst nahe zur Außenwand des Halteteils 7a hin angeordnet und dient zur Druckführung. An der Wan-

i.P. II
0179278

dung des Halteteils 7a liegt außerhalb des Halteteils 7a im Bereich der Bohrung 43 das druckempfindliche Element 6a an. Es kann sowohl wie in Figur 1 als auch wie in den Figuren 2 und 3 beschrieben ausgebildet sein. Mit Hilfe eines Rings 44 ist das druckempfindliche Element 6a am Halteteil 7a befestigt. Ferner ist der Ring 44 auch zur Erzeugung einer Gegenkraft bei Anpressen des druckempfindlichen Elements 6a notwendig. Der Ring 44 kann, in der Figur 4 nicht ersichtlich, geschlitzt sein und mit Hilfe eines Zugankers fest am Halteteil 7a angeordnet sein. Außerdem kann der Ring 44 auch ein Gewinde aufweisen und damit auf dem Halteteil 7a aufgeschraubt sein.

Selbstverständlich sind unterschiedliche Anordnungen des druckempfindlichen Elements 6a am Ring 44 denkbar. Es ist möglich, das druckempfindliche Element 6a mit einem Fortsatz 45 in eine Bohrung 46 des Rings 44 einzuschrauben; oder das druckempfindliche Element 6a befindet sich in einer kleinen, an der Innenseite des Rings 44 angebrachten Ausnehmung.

In Figur 5 ist eine Abwandlung des Ausführungsbeispiels nach Figur 4 dargestellt. Hier ist an der Außenwandung des Halteteils 7a eine Ausnehmung 47, z.B. eine Ausfräsung, ausgebildet, in der das druckempfindliche Element 6a angeordnet ist. Dadurch kann sowohl die Wandstärke zwischen dem Element 6a und der druckführenden Bohrung 43 verkleinert werden als auch das Element 6a am Halteteil 7a befestigt werden. Dabei ist kein zusätzlicher Ring 44 notwendig. Ein Ring 44 würde aber das Element 6a noch zusätzlich in seiner Position halten und es vor mechanischen Verletzungen schützen.

Die Ausführungen nach Figur 4 und 5 haben sich besonders zur Druckmessung an Einspritzventilen als vorteilhaft erwiesen.

Alle in der Beschreibung, den nachfolgenden Ansprüchen und der Zeichnung dargestellten Merkmale können sowohl einzeln als auch in beliebiger Kombination miteinander erfindungswesentlich sein.

0179278

R. 19693 i.P. II
1817/ot/wi
8.8.1985 Sf/Pi

Firma Robert Bosch GmbH, 7000 Stuttgart 1

Patentansprüche

1. Drucksensor, insbesondere zur Erfassung des Drucks
   eines von einer Wandung begrenzten Mediums (Verbrennungsdruckmessung bei Diesel- und Ottomotoren;
   Druckmessung in Verteilerpumpen für die Kraftstoffzuführung), mit einem druckempfindlichen Element
   (Widerstandselement, Dickschichtwiderstand, piezoresistives oder piezoelektrisches Bauteil), welches
   unter Druckeinwirkung seine elektrischen Eigenschaften ändert, ferner mit einem Träger, der das
   druckempfindliche Element und dessen elektrische
   Zuleitungen lagert, dadurch gekennzeichnet, daß der
   Träger einen gegenüber dem Medium, dessen Druck bestimmt werden soll, abgeschlossenen Hohlraum (17)
   in Form eines Sacklochs bildet, in welchem das
   druckempfindliche Element (6), gegen den Hohlraumboden von innen anliegend, angeordnet ist.

2. Drucksensor nach Anspruch 1, dadurch gekennzeichnet,
   daß das druckempfindliche Element (6) von einem Halteteil (7) von innen gegen den Trägerboden (4) gepreßt ist.

3. Drucksensor nach Anspruch 1 oder 2, dadurch gekennzeichnet, daß zwischen der Innenfläche des Bodens (4) des Trägers (1) und dem druckempfindlichen Element eine Zwischenscheibe (5) aus elastischem, druckübertragenden Material angeordnet ist.

4. Drucksensor nach einem der Ansprüche 1-3, dadurch gekennzeichnet, daß das druckempfindliche Element (6) auf einem isolierenden Zwischenmaterial (Glas, Keramik, Kunststoffe 8) angeordnet, im Falle eines Dickschichtwiderstandes auf dieses aufgedruckt ist, wobei das Zwischenmaterial (8) auch die elektrischen Anschlüsse (9) zum druckempfindlichen Element aufnimmt.

5. Drucksensor nach Anspruch 4, dadurch gekennzeichnet, daß das Zwischenmaterial (8) durch einen es umgebenden Metallring (10) mechanisch gefaßt ist.

6. Drucksensor nach einem der Ansprüche 1-5, dadurch gekennzeichnet, daß das Halteteil (7) in den Träger (1) eingespannt, vorzugsweise eingeschraubt ist und eine vorgegebene Anpreßkraft über das Zwischenmaterial (8) auf das druckempfindliche Element (6) ausübt.

7. Drucksensor nach einem der Ansprüche 1-6, dadurch gekennzeichnet, daß das Halteteil (7) und der Metallring (10) aus einem einstückigen Bauteil bestehen, so daß das Zwischenmaterial (8) mit den Anschlüssen (9) und dem druckempfindlichen Element (6) direkt am unteren Ende des Halteteils (7) angebracht sind.

10693 i.P.I

0179278

8. Drucksensor nach einem oder mehreren der Ansprüche
1-7, dadurch gekennzeichnet, daß mindestens der
Boden (4) des Trägers (1) so ausgebildet ist, daß
er mit Bezug auf die einwirkenden Drücke eine elastische Verformung erfährt, die sich auf das hierzu
unabhängig durch das Halteteil unterstützte und gelagerte druckempfindliche Element (6) auswirkt.

9. Drucksensor nach einem der Ansprüche 1- 8, dadurch
gekennzeichnet, daß der Träger (1) ein schraubenförmiges Teil ist, welches in die Aufnahmebohrung
(14a) der Wandung (14) so weit eingeschraubt ist,
daß ein nach innen in den Druckraum überstehender
Trägerringwandbereich (Rohrstück 15) ebenfalls und
zusätzlich zum Boden (4) des Trägers (1) eine elastische Verformung erfährt.

10. Drucksensor nach einem der Ansprüche 1- 9, dadurch
gekennzeichnet, daß das Halteteil (7) als in die
Sacklochbohrung (17) des Trägers (1) einschraubbare Hohlschraube ausgebildet ist und daß ihr innerer Hohlraum (11) nach Montage und Durchführung
der elektrischen Zuleitungen von einem elastischen
Werkstoff ausgegossen ist.

11. Drucksensor nach einem der Ansprüche 1- 10 dadurch
gekennzeichnet, daß der gegenüber dem Druckmedium
abgeschlossene, sacklochförmige Hohlraum von der
Wandung (14) des das Druckmedium einschließenden
Druckgefäßes gebildet ist, in welche Wandung das
Halteteil (7) im oberen (äußeren) Teil eingeschraubt
ist.

1969037 9278

12. Drucksensor nach einem oder mehreren der Ansprüche
1 bis 11, dadurch gekennzeichnet, daß mindestens im
elastischen Verformungsbereich des Trägers (1) das
Halteteil (7) im Abstand zu dem Träger (1) angeordnet
ist.

13. Drucksensor nach einem der Ansprüche 1 bis 12, dadurch gekennzeichnet, daß das isolierende Zwischenmaterial (28), das druckempfindliche Element (29) und
eine zweite Isolierschicht (33) in Dickschichttechnik
schichtweise mindestens auf der dem Boden (4) des Trägers (1) zugewandten Stirnseite (27) des Halteteils
(7) angeordnet sind und daß die zweite Isolierschicht
(33) den Boden (4) berührt.

14. Drucksensor nach Anspruch 13, dadurch gekennzeichnet, daß die elektrischen Anschlüsse (12) für das druckempfindliche Element (29) über Bohrungen (34, 37, 38) in
den Hohlraum (11) des Halteteils (7) geführt sind.

15. Drucksensor nach Anspruch 1 bis 14, dadurch gekennzeichnet, daß an der Außenwandung (25) des Halteteils
(7) eine Ausnehmung (26) ausgebildet ist, in deren Bereich die Anschlußbahnen (30) des Druckelements (29)
und seine elektrischen Anschlüsse (12) miteinander verbunden sind.

16. Drucksensor nach Anspruch 1 bis 14, dadurch gekennzeichnet, daß das dem Boden (4) des Trägers (1) zugewandte Endteil (35) des Halteteils (7) einen Fortsatz
(36) aufweist, auf dem schichtweise in Dickschichttechnik das isolierende Zwischenmaterial (28), das druckempfindliche Element (29) und die zweite Isolierschicht
(33) angeordnet sind.

19695 i.P. II
0179278

17. Drucksensor, insbesondere zur Erfassung des Drucks
eines von einer Wandung begrenzten Mediums (Verbrennungsdruckmessung bei Diesel- und Ottomotoren; Druckmessung in
Verteilerpumpen und in Elementen für die Kraftstoffzuführung), mit einem druckempfindlichen Element (Widerstandselement, Dickschichtwiderstand, piezoresistives oder
piezoelektrisches Bauteil), welches durch Druckeinwirkung
seine elektrischen Eigenschaften ändert, ferner mit einem
Träger, der das druckempfindliche Element und dessen
elektrische Zuleitungen lagert, dadurch gekennzeichnet,
daß der Träger (7a) einen Raum (43) für das Medium aufweist, dessen Druck bestimmt werden soll, und daß das
druckempfindliche Element (6a) direkt an der Wandung des
Raums (43) von außen anliegend angeordnet ist.

18. Drucksensor nach Anspruch 17, dadurch gekennzeichnet,
daß das druckempfindliche Element (6a) im Bereich mit einem möglichst kleinen Abstand an der Wand des Raums (43)
angeordnet ist.

19. Drucksensor nach Anspruch 17, dadurch gekennzeichnet,
daß das druckempfindliche Element (6a) im Bereich einer
an der Wand des Raums (43) ausgebildeten Aussparung (47)
angeordnet ist.

20. Drucksensor nach einem der Ansprüche 17 bis 19, dadurch gekennzeichnet, daß das druckempfindliche Element
(6a) mit einem Befestigungselement (44) am Träger (7a)
angeordnet ist.

21. Drucksensor nach einem der Ansprüche 17 bis 20, dadurch gekennzeichnet, daß der Träger (7a) Teil eines
Einspritzventils ist.

FIG. 1

0179278

FIG. 2

FIG. 3

0179278

# FIG. 4

# FIG. 5